# FASCICULE DE BREVET EUROPEEN

(11) **EP 2 207 710 B1**
(45) Date de publication et mention de la délivrance du brevet: **22.06.2011**
(21) Numéro de dépôt: 08837283.4
(22) Date de dépôt: 03.09.2008
(51) Int. Cl.: B62D 65/00, E04H 5/02, B23P 21/00

(54) **PROCEDE D'AGRANDISSEMENT D'UN ATELIER DE MONTAGE D'UNE USINE DE FABRICATION DE VEHICULES AUTOMOBILES ET ATELIERS DE MONTAGE ASSOCIES**
VERFAHREN ZUR ERWEITERUNG EINER MONTAGEHALLE EINER FAHRZEUGPRODUKTIONSANLAGE UND ENTSPRECHENDE MONTAGEHALLEN
METHOD FOR EXTENDING AN ASSEMBLY HALL OF A MOTOR VEHICLE MANUFACTURING PLANT AND ASSOCIATED ASSEMBLY HALLS

(30) Priorité: 10.10.2007 FR 0758178
(43) Date de publication de la demande: 21.07.2010
(73) Titulaire: Peugeot Citroën Automobiles Société Anonyme, 78140 Velizy Villacoublay (FR)
(72) Inventeur: TONDINI, Vincent, F-78280 Guyancourt (FR)
(74) Mandataire: Vigand, Régis Louis Michel
(86) Numéro de dépôt international: PCT/FR2008/051566
(87) Numéro de publication internationale: WO 2009/047414

(56) Documents cités:
- EP-A- 0 357 473
- EP-A- 0 737 543
- WO-A-03/074348
- DE-C1- 19 514 594
- FR-A- 2 638 196
- US-A- 4 793 055

## Description

L'invention concerne le domaine des procédés d'agrandissement d'un atelier de montage d'une usine de fabrication de véhicules automobiles, ainsi que le domaine des ateliers de montage d'usine de fabrication de véhicules automobiles existant avant agrandissement comme obtenus après agrandissement. Les véhicules automobiles considérés sont préférentiellement des voitures de tourisme ou des véhicules utilitaires légers. Les chiffres de cadence de production donnés dans la suite concernent des voitures de tourisme ou des véhicules utilitaires légers, mais pas par exemple des camions.

Un atelier de montage d'usine de fabrication de véhicules automobiles essaye de réaliser le meilleur compromis possible entre différentes contraintes. La qualité des véhicules fabriqués ainsi que l'ergonomie de fonctionnement de l'atelier de montage essayent d'être les plus élevées possibles pour un investissement industriel que l'on essaye par contre de diminuer le plus possible. Cet atelier de montage doit essayer de s'adapter le plus possible à la diversité des véhicules à fabriquer au sein de l'ensemble des segments véhicule. La dénomination normalisée pour un gabarit de véhicule est le terme segment. Dans le sens de la dénomination normalisée, les différents « segments » ou « segments véhicule » sont M1, M2, B1, B2, H. Un premier segment véhicule est un premier type de véhicule correspondant à une première base roulante d'une première plage de longueurs donnée. Un deuxième segment véhicule est un deuxième type de véhicule correspondant à une deuxième base roulante d'une deuxième plage de longueurs donnée. Les première et deuxième plages de longueurs sont distinctes entre elles, elles peuvent soit être disjointes entre elles, soit présenter une zone de recouvrement entre elles. La variation au fil du temps des volumes de production de véhicules requis peut être importante, ce qui amené à essayer de rendre l'atelier évolutif, le coût de passage d'une étape de l'évolution à une autre tendant à être minimisé. Ceci est surtout vrai dans les pays correspondant à des marchés émergents où la cadence de production de véhicules désirée peut être faible tout d'abord, pour augmenter ensuite et terminer par devenir importante et atteindre le niveau que cette production peut avoir dans les pays constituant des marchés confirmés. Un atelier de montage pouvant être agrandi au fil du temps, de manière relativement aisée et à coût raisonnable, est un atelier de montage évolutif. Un atelier de montage est évolutif par opposition aux ateliers de montage classiques où les augmentations de cadence de production, soit aboutissent à des ateliers de montage non optimisés au niveau de leur rendement, soit nécessitent pratiquement de raser l'existant pour tout reconstruire afin de pouvoir optimiser le rendement. Les ateliers de montage classiques ont été construits pour une cadence de production donnée ou pour une plage de cadence de production donnée et n'ont pas été prévus au départ pour évoluer vers des cadences plus importantes tout en conservant un rendement optimisé.

Selon un art antérieur d'atelier évolutif, par exemple décrit dans les demandes de brevet française FR 2638196 et américaine US 20020129566, il est connu de réaliser un atelier et même une usine, qui sont constitués d'éléments modulaires. La présence de ces éléments modulaires autorise une évolutivité importante, et cela reste vrai un peu quel que soit l'agencement au départ. Par contre, ces éléments modulaires ne permettent pas, quelle que soit la phase d'évolution, que ce soit au départ ou en cours d'évolution, ni beaucoup de souplesse dans l'agencement initial de l'atelier et de l'usine, ni un rendement optimisé. En effet une contrainte importante pèse sur ce type d'atelier et d'usine évolutifs, à savoir la nécessité de devoir réduire aussi bien les diverses lignes de production que les diverses zones de logistique ou de préparation secondaire à une combinaison d'une ou de plusieurs éléments modulaires de structure donnée identique ou au moins similaire.

L'invention propose une approche radicalement différente.

L'évolutivité va être assurée de manière relativement aisée, non pas parce que l'atelier serait constitué de briques élémentaires identiques ou similaires agencées dans un ordre quelconque au départ, auxquelles il est aisé de rajouter d'autres briques élémentaires, mais plutôt parce que l'agencement de l'atelier au départ, la configuration initiale de ses différentes parties est conçue d'une manière particulière, permettant une évolutivité relativement aisée, et ce même si tout ou partie de l'atelier initial se présente sous forme de maçonneries. L'invention reste utilisable dans le cas d'un atelier constitué d'éléments modulaires préfabriqués, mais présente clairement moins d'intérêt. A chaque phase d'évolution, le compromis réalisé entre d'une part l'augmentation de la cadence de production et d'autre part la minimisation de l'investissement comme de la perturbation engendrée au niveau de l'atelier, tient compte des compromis correspondant aux autres phases d'évolution envisagées. De préférence, on cherche une adaptabilité rapide, tout en maintenant pratiquement la linéarité des investissements lors du passage d'une phase d'évolution à l'autre.

Il s'agit de déterminer quelle configuration de départ de l'usine nécessitera le moins de bouleversements possible lors de l'augmentation de la cadence de production tout en n'étant pas trop ruineuse au départ, même si cette configuration de départ coûtera plus cher que celle qui serait optimisée pour un atelier de montage à cadence de production faible mais pratiquement impossible à faire évoluer dans des conditions économiques raisonnables.

L'invention propose un procédé d'agrandissement d'un atelier de montage pour augmenter la cadence de production de véhicules. Ce procédé d'agrandissement sera appliqué avec une efficacité particulièrement élevée lorsque l'atelier de montage auquel ce procédé est appliqué présente une configuration qui s'y prête. Par conséquent, l'invention propose également les ateliers de montage correspondants installés avant agrandissement. Les ateliers de montage obtenus après agrandissement sont également dans la portée de l'invention.

Les compromis à réaliser sont ici spécialement difficiles à obtenir dans la mesure où l'atelier de montage évolutif intègre deux lignes de montage distinctes entre elles correspondant respectivement à deux segments véhicule distincts entre eux. Ordinairement un atelier de montage intègre une ou plusieurs lignes de montage correspondant toutes au même segment véhicule.

La situation ici envisagée est celle d'une incertitude importante quant aux évolutions des deux lignes de montage. Un premier cas de figure peut se présenter. La première ligne de montage peut devoir évoluer au cours du temps beaucoup plus vite que la deuxième ligne de montage laquelle peut rester stable ou relativement stable au cours du temps. Un deuxième cas de figure peut se présenter. La deuxième ligne de montage peut devoir évoluer au cours du temps beaucoup plus vite que la première ligne de montage laquelle peut rester stable ou relativement stable au cours du temps. Un troisième cas de figure peut se présenter. L'une des lignes de montage peut dans un premier temps devoir évoluer au cours du temps beaucoup plus vite que l'autre ligne de montage laquelle peut rester stable ou relativement stable au cours du temps, tandis que dans un deuxième temps, la tendance s'inverse. La souplesse d'évolution va donc être ici un paramètre particulièrement intéressant. Cette souplesse sera rendue possible par des dispositions particulières de l'atelier de montage au moins à certaines phases de son évolution au cours du temps.

Le fait même de vouloir réaliser un atelier évolutif qui soit en même temps multi-segments est déjà une gageure. De préférence, alors que la première ligne de montage concerne un véhicule usuel, la deuxième ligne de montage concernera plutôt un véhicule de niche, présentant par exemple un gabarit imposant ou bien une plateforme spécifique, comme par exemple un monospace ou un coupé-cabriolet.

Selon l'invention, il est prévu un procédé d'agrandissement d'un atelier de montage d'une usine de fabrication de véhicules automobiles, de sorte à obtenir un nouvel atelier de montage à partir d'un atelier de montage antérieur de plusieurs années, ledit atelier de montage antérieur comprenant une première ligne de montage, d'un premier segment véhicule, laquelle comprend deux tronçons en regard l'un de l'autre et séparés l'un de l'autre par un espace, le procédé étant caractérisé en ce qu'il comprend une étape d'installation de deux tronçons habillage caisse d'une deuxième ligne de montage, d'un deuxième segment véhicule, dans l'espace entre lesdits tronçons de la première ligne de montage, de manière à ce que lesdits quatre tronçons soient parallèles les uns aux autres, afin d'augmenter la cadence de production de véhicules de la deuxième ligne de montage.

De préférence, plusieurs tronçons sont ajoutés aux dits tronçons existants de la première ligne de montage dont au moins les emplacements sont conservés, tout en n'étant pas placés dans le prolongement ni dudit ou desdits tronçons existants conservés ni dudit ou desdits emplacements conservés de tronçons existants de la première ligne de montage et l'emplacement de l'atelier antérieur est conservé. Avantageusement, au moins un mur de l'atelier de montage est conservé.

Selon l'invention, il est aussi prévu un atelier de montage d'une usine de fabrication de véhicules automobiles, comprenant : une première ligne de montage d'un premier segment véhicule, comprenant un tronçon habillage caisse et un autre tronçon ; caractérisé en ce que l'atelier de montage comprend aussi une deuxième ligne de montage d'un deuxième segment véhicule, comprenant deux tronçons habillage caisse situés le long l'un de l'autre ; en ce qu'un desdits tronçons habillage caisse de la deuxième ligne de montage est situé le long dudit tronçon habillage caisse de la première ligne de montage ; et en ce que l'autre desdits tronçons habillage caisse de la deuxième ligne de montage est situé le long dudit autre tronçon de la première ligne de montage.

Le document WO 03/074348 présente un atelier de montage conforme au préambule de la revendication 1.

Avoir écarté les tronçons de la ligne de montage installée en premier libère un espace entre ces tronçons qui va permettre d'ajouter ensuite les tronçons de la ligne de montage installée en second. Ceci est particulièrement intéressant lorsque les tronçons de la ligne de montage installée en premier sont placés près d'un mur au-delà duquel l'extension de l'atelier de montage est rendu pratiquement impossible par la présence derrière ce mur, des autres ateliers de ferrage et de peinture.

Cet espace, avant que n'y soient installés les tronçons de la ligne de montage installée en second, va être préférentiellement occupé par une ou plusieurs zones de logistique légère, par exemple charriots mobiles sur le sol, plutôt que par une ou plusieurs zones de préparation lourde, par exemple des éléments en dur ancrés sur le sol ou même installés en profondeur dans le sol. Ainsi, on ne risque plus de devoir, lors du passage d'une phase d'évolution à une autre, de devoir déplacer des zones importantes de préparation lourde ; il ne sera au contraire nécessaire que de bouger des zones de logistique légères.

De préférence, ledit tronçon habillage caisse de la première ligne de montage est situé au début de la première ligne de montage. Dans ce cas, ne pas devoir bouger le premier tronçon de la ligne de montage installée en premier est encore plus intéressant, car l'entrée de la ligne de montage située juste en amont de ce premier tronçon, est particulièrement pénible à déplacer. En effet, cette entrée de ligne de montage intègre une section élévatrice de véhicules qui est un équipement lourd. Par ailleurs, elle constitue également un poste de cadencement informatique responsable de la synchronisation de l'arrivée de certains sous-ensembles sur la ligne de montage des véhicules, comme par exemple les roues, les sièges, le faisceau araignée qui est le faisceau majeur du véhicule, ou du lancement de la fabrication de la planche de bord, ou de la préparation de certains éléments mécaniques comme le groupe motopropulseur ou le train. Par ailleurs, cette entrée de ligne de montage constitue souvent un lieu de changement de manutention, par exemple les véhicules en l'air sont posés sur le sol ou bien les véhicules au sol sont élevés dans les airs.

Dans un premier mode de réalisation, ledit autre tronçon de la première ligne de montage est un tronçon montage véhicule. Ce premier mode de réalisation correspond à une phase d'évolution de l'atelier de montage dans laquelle la première ligne de montage est à petite cadence tandis que la deuxième ligne de montage est à moyenne cadence.

Dans un deuxième mode de réalisation, ledit autre tronçon de la première ligne de montage est un tronçon habillage caisse. Ce deuxième mode de réalisation correspond à une phase d'évolution de l'atelier de montage dans laquelle la première ligne de montage ainsi que la deuxième ligne de montage sont à moyenne cadence. La première ligne de montage comprend avantageusement aussi deux tronçons montage véhicule situés orthogonalement aux deux tronçons habillage caisse de la première ligne de montage. Ainsi la surface totale de l'atelier de montage peut être relativement plus réduite tout en maintenant une bonne fluidité des flux de véhicules ainsi qu'un espace adéquat disponible pour les zones de préparation lourdes et les zones de logistique légères.

Dans le premier comme dans le deuxième mode de réalisation, de préférence, la deuxième ligne de montage comprend aussi deux tronçons montage véhicule situés orthogonalement aux deux tronçons habillage caisse de la deuxième ligne de montage. Ainsi la surface totale de l'atelier de montage peut être relativement plus réduite tout en maintenant une bonne fluidité des flux de véhicules ainsi qu'un espace adéquat disponible pour les zones de préparation lourde et les zones de logistique légères.

De préférence, lesdits tronçons habillage caisse de la deuxième ligne de montage sont longitudinalement décalés par rapport aux dits tronçons de la première ligne de montage.

Ainsi, les passages des flux de véhicules d'un tronçon à l'autre, ne s'opèrent pas aux mêmes endroits de l'atelier de montage pour les deux lignes de montage, ce qui rend ces passages plus simples. Si ces passages étaient aux mêmes endroits, la gestion en serait plus complexe, et il faudrait deux niveaux au dessus de la surface de travail de l'atelier de montage au lieu d'un, puisque les passages, s'opérant alors aux mêmes endroits, ne pourraient plus s'effectuer au même niveau de hauteur dans l'atelier de montage.

De préférence, l'entrée de la deuxième ligne de montage est située dans le prolongement du premier tronçon de montage de la deuxième ligne de montage. Cette disposition permet d'avoir eu, au cours des phases antérieures d'évolution de l'atelier de montage, une longueur de flux véhicules relativement faible le long de la deuxième ligne de montage.

L'invention va maintenant être décrite plus en détail à l'aide des figures ci-après, données à titre d'exemples illustratifs et non limitatifs, où :
- la figure 1 représente schématiquement la stratégie d'évolution de l'atelier de montage en appliquant à certaines phases d'évolution le procédé d'agrandissement selon l'invention ;
- la figure 2 représente schématiquement un exemple d'atelier de montage d'une usine de fabrication de véhicules automobiles correspondant à la phase 1 de la figure 1 ;
- la figure 3 représente schématiquement un exemple d'atelier de montage d'une usine de fabrication de véhicules automobiles correspondant à la phase 2-1 de la figure 1 ;
- la figure 4 représente schématiquement un exemple d'atelier de montage d'une usine de fabrication de véhicules automobiles correspondant à la phase 2-2 de la figure 1 ;
- la figure 5 représente schématiquement un exemple d'atelier de montage d'une usine de fabrication de véhicules automobiles correspondant à la phase 3-1 de la figure 1 ;
- la figure 6 représente schématiquement un exemple d'atelier de montage d'une usine de fabrication de véhicules automobiles correspondant à la phase 3-2 de la figure 1 ;
- la figure 7 représente schématiquement un exemple d'atelier de montage d'une usine de fabrication de véhicules automobiles correspondant à la phase 4 de la figure 1.

Une usine est bâtie sur un terrain. Ce terrain est clos, il est entouré par une clôture. La clôture comprend des ouvertures, temporaires ou permanentes, permettant aux différents flux entrants et sortants de l'usine de circuler.

De préférence dans la partie centrale du terrain, se trouvent des zones bâties, sous la forme de plusieurs bâtiments séparés ou sous la forme d'un bâtiment commun, de fonctions d'appui. Ces zones bâties de fonctions d'appui concernent certaines installations générales comme par exemple des bureaux administratifs assurant le soutien administratif des ateliers qui les entourent.

Les zones bâties sont entourées par différents ateliers qui s'étendent de la partie centrale du terrain où sont regroupées les zones bâties vers la périphérie du terrain en direction de la clôture. Parmi ces ateliers, on trouve au moins un atelier de ferrage, un atelier de peinture, un atelier de montage. Dans l'atelier de ferrage, sont assemblées les caisses de véhicule, généralement à partir de tôles préalablement embouties. Dans l'atelier de peinture, les caisses de véhicule sont peintes.

Dans l'atelier de montage, les caisses peintes de véhicule sont équipées pour devenir des véhicules complets et aptes à rouler. L'atelier de montage intègre d'une part les lignes de production et d'autre part la logistique associée au montage ainsi que les zones de préparation secondaire correspondantes. La logistique intègre notamment les pièces et les sous-ensembles qui vont alimenter les lignes de production.

Une zone supplémentaire, correspondant au bout d'usine, c'est-à-dire à la dernière étape de production succédant au montage, et comprenant les étapes de contrôle et de réglage des véhicules qui viennent d'être fabriqués est soit de préférence intégrée à l'atelier de montage soit contigüe à l'atelier de montage, le bout d'usine pouvant alors être séparé de l'atelier de montage par une cloison. Malgré l'éventuelle présence d'une cloison, le bout d'usine est considéré comme faisant partie de l'atelier de montage qui dans ce cas, au lieu de se présenter sous la forme d'un bâtiment, se présenterait sous la forme de deux bâtiments accolés l'un à l'autre et présentant entre eux une communication directe permettant aux véhicules en fin de montage de passer dans le bout d'usine sans avoir besoin de sortir à l'extérieur des bâtiments.

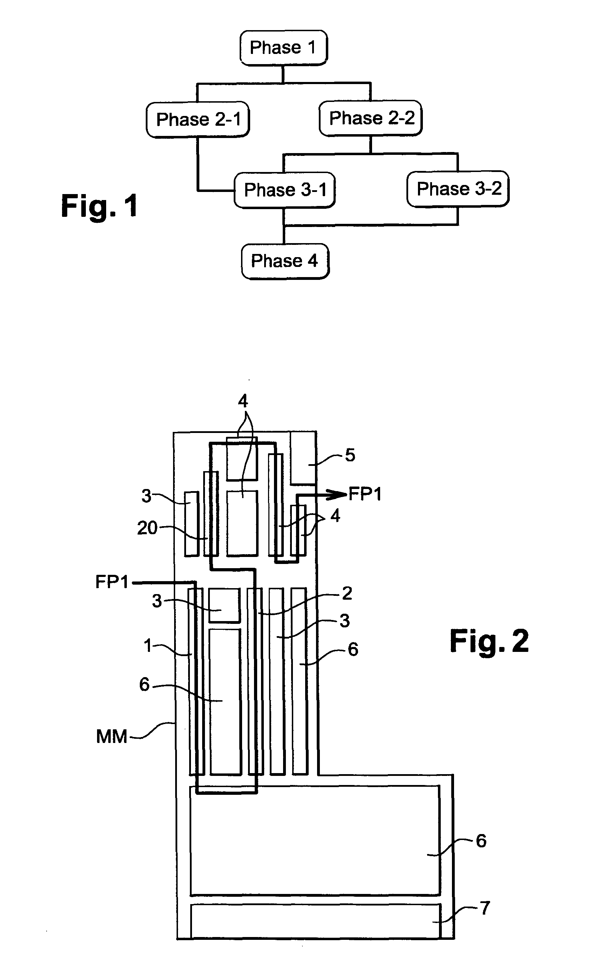

Sur le terrain de l'usine, sont encore situés d'autres éléments comme un parc de retouche véhicules, un parc véhicules neufs, un emplacement d'expédition routière, un emplacement d'expédition ferroviaire incluant une portion de voie ferrée passant sur le terrain de l'usine et un parc fournisseur. De manière alternative, le parc fournisseur peut être situé à l'extérieur du terrain de l'usine derrière la clôture. Le parc de retouche véhicules est l'endroit où sont stockés les véhicules fabriqués présentant certains défauts nécessitant d'être corrigés avant d'être expédiés à la vente. Le parc véhicules neufs est l'endroit ou sont stockés les véhicules fabriqués prêts à être expédiés à la vente. Ces véhicules prêts à être expédiés à la vente attendent d'être expédiés vers les points de vente soit par transport routier à partir de l'emplacement d'expédition routière soit par transport ferroviaire à partir de l'emplacement d'expédition ferroviaire. Une piste d'essai, sur laquelle les véhicules fabriqués roulent avant d'être stockés sur le parc véhicules neufs, est également présente. Cette piste est de préférence située soit au-delà de l'expédition ferroviaire, un pont ou un tunnel étant alors prévu pour y accéder, soit à côté de l'atelier de montage, du côté opposé au mur MM représenté sur les figures 2 à 7.

De préférence, l'atelier de montage, est une maçonnerie. Une maçonnerie est un ouvrage composé de matériaux unis par un liant. Des exemples non limitatifs de tels matériaux sont des pierres, des briques, des moellons, etc.... Des exemples non limitatifs de tels liants sont du mortier, du plâtre, du ciment, etc.... C'est lorsque l'atelier de montage est construit « en dur » et non pas sous la forme d'assemblages en éléments préfabriqués, que la configuration initiale prend toute son importance. En effet, il est nettement plus difficile de bouger un bâtiment en dur et d'en détruire certaines parties pour changer l'agencement de l'atelier de montage que de déplacer ou de rajouter des éléments préfabriqués simplement posés et assemblés entre eux de manière amovible.

L'atelier de montage est avantageusement une maçonnerie qui ne comporte avantageusement qu'un seul niveau, qui sera en général le rez-de-chaussée, où toutes les opérations de travail sur véhicule ou toutes les tâches de montage à valeur ajoutée, comme par exemple le montage d'un phare, sont réalisées, c'est-à-dire généralement au sol. L'atelier de montage peut alors toutefois comprendre un ou plusieurs étages supplémentaires où sont réalisées certaines opérations, et de préférence toutes, de transfert ou de transport d'un véhicule en cours de fabrication, d'un brin à un autre, ces opérations étant donc réalisées en hauteur, notamment pour ne pas couper les lignes de montage ou les flux de circulation dans les zones logistiques à l'intérieur de l'atelier de montage. Il n'y a de préférence qu'un seul niveau de travail sur véhicule. On emploiera indifféremment les termes de brin ou de tronçon, un brin ou un tronçon représentant un morceau de ligne de production sensiblement rectiligne et d'un seul tenant. L'atelier de montage comprend des murs extérieurs marquant la limite entre l'atelier de montage et l'extérieur ou des murs intérieurs marquant la limite entre l'atelier de montage et un autre bâtiment distinct de l'atelier de montage, comme une zone bâtie de fonction d'appui ou un autre atelier, par exemple de ferrage ou de peinture. Ces murs sont à distinguer d'éventuelles cloisons internes à l'atelier de montage séparant les différentes parties de l'atelier de montage entre elles. Un mur particulier, appelé mur MM sur les figures 2 à 7, dit aussi mur mitoyen car c'est le mur qui est du côté des autres ateliers de ferrage et de peinture et qui pourrait même être partagé entre les ateliers, est un mur qui est de préférence conservé lors du passage d'une phase d'évolution à l'autre. Le mur MM fait face à un tronçon habillage caisse.

De préférence, ce mur MM est plutôt situé vers la partie centrale du terrain sur lequel est située usine. Il est avantageusement d'une part parallèle à un mur de l'atelier de peinture qui lui est le plus proche et d'autre part parallèle à un mur de l'atelier de ferrage qui lui est le plus proche.

Dans la description des figures 2 à 7, il sera question de ligne de montage, de partie habillage caisse et de partie montage véhicule. Sur une ligne de montage, la partie habillage caisse précède la partie montage véhicule. La première étape de la partie montage véhicule est généralement l'étape de coiffage et de vissage des organes mécaniques sous la caisse du véhicule. A titre d'exemple et d'illustration, un exemple de déroulement des opérations sur une ligne de montage va maintenant être décrit.

Le déroulement des opérations sur une ligne de montage, incluant d'abord les étapes d'habillage de la caisse de véhicule puis les étapes de montage du véhicule proprement dites, est réalisé à la fois sur une manutention au sol et aérienne. Les étapes d'habillage caisse sont réalisées à l'aide d'une manutention au sol. Les étapes de montage véhicule sont réalisées à l'aide d'une manutention aérienne jusqu'à la dépose sur roues du véhicule utilisant des balancelles comme mobile.

Les étapes d'habillage caisse comprennent successivement le démontage des portes classiques et ou le cas échéant le démontage des portes coulissantes, le montage de l'insonorisation du tablier, le montage des arceaux de sécurité, le cas échéant le montage du coffre et du toit pour les véhicules coupé-cabriolé, le cas échéant le montage du toit ouvrant, le montage de la garniture du pavillon, la mise en place des tapis, le montage du pédalier, le montage de la planche de bord, le montage des joints d'étanchéité, l'installation des vitrages.

Les étapes de montage véhicule proprement dites comprennent successivement le coiffage et le vissage automatique des organes mécaniques sous la caisse du véhicule, le montage des ressorts de train arrière, les contrôles des circuits notamment de réfrigération, de frein et d'eau, la pose de la batterie dans le véhicule, la pose des écrans sous la caisse du véhicule, les opérations de remplissage notamment du lave-glace, du réservoir de carburant et des circuits précités, la mise en pression du circuit de suspension, le cas échéant pour les véhicules diesel l'amorçage du circuit de carburant, l'opération de tassage des freins, l'opération de réglage du frein à main, le montage des roues principales, le montage de la roue de secours, le montage des sièges, la dépose au sol du véhicule, le remontage des portes classiques, le cas échéant le remontage des portes latérales coulissantes.

Dans l'atelier de montage, en bout d'usine, sont effectués, le réglage du parallélisme, le réglage des projecteurs et des feux additionnels, le passage au banc de roulage, et les retouches sur l'ensemble des défauts identifiés.

La figure 1 représente schématiquement la stratégie d'évolution de l'atelier de montage en appliquant à certaines phases d'évolution le procédé d'agrandissement selon l'invention. Une petite cadence correspond de préférence à une vitesse de fabrication inférieure à de 20 véhicules par heure, par exemple 14 véhicules par heure. Une moyenne cadence correspond de préférence à une vitesse de fabrication comprise entre 20 et 35 véhicules par heure, par exemple 28 véhicules par heure. Dans la phase 1, la première ligne de montage est à petite cadence, tandis que la deuxième ligne de montage est absente. Dans la phase 2-1, la première ligne de montage est à moyenne cadence, tandis que la deuxième ligne de montage est absente. Dans la phase 2-2, la première ligne de montage est à petite cadence, tandis que la deuxième ligne de montage est aussi à petite cadence. Dans la phase 3-1, la première ligne de montage est à moyenne cadence, tandis que la deuxième ligne de montage est à petite cadence. Dans la phase 3-2, la première ligne de montage est à petite cadence, tandis que la deuxième ligne de montage est à moyenne cadence. Dans la phase 4, la première ligne de montage est à moyenne cadence, tandis que la deuxième ligne de montage est aussi à moyenne cadence. Au cours de l'évolution de l'atelier de montage, différents scénarios sont possibles, ce qui confère une grande souplesse d'évolution à l'atelier de montage. De la phase 1, on peut passer à la phase 2-1 ou bien à la phase 2-2. De la phase 2-1, on peut passer à la phase 3-1. De la phase 2-2, on peut passer à la phase 3-1 ou bien à la phase 3-2. De la phase 3-1, on peut passer à la phase 4. De la phase 3-2, on peut passer à la phase 4. On peut commencer à l'une ou l'autre des phases représentées sur la figure 1.

La figure 2 représente schématiquement un exemple d'atelier de montage d'une usine de fabrication de véhicules automobiles correspondant à la phase 1 de la figure 1. Cet atelier de montage comprend une première ligne de montage mais pas de deuxième ligne de montage.

La flèche FP1 représente le flux de production de la première ligne de montage qui est aussi le sens de circulation des véhicules sur la première ligne de montage dans l'atelier de montage. Les étapes habillage caisse sont réalisées sur le brin ou le tronçon habillage caisse 1. Les étapes montage véhicule sont réalisées sur le brin ou le tronçon montage véhicule 2. Un autre tronçon final de montage véhicule 20 est situé dans le bout d'usine 4.

A l'issue du bout d'usine 4, les véhicules fabriqués sont aiguillés soit vers le parc retouche véhicules s'ils présentent des défauts pour que ceux-ci soient corrigés soit vers le parc véhicules neufs s'ils ne présentent pas ou plus de défaut. En provenance du parc fournisseur, les fournisseurs déchargent pièces et sous-ensembles sur le quai 7. Le bout d'usine 4 comprend une zone de qualité 5.

Le quai 7 est de préférence situé d'un seul côté de l'atelier de montage et avantageusement du côté opposé au bout d'usine 4 pour éviter ou du moins diminuer les croisements ou les perturbations au niveau des flux de personnes et au niveau des flux de véhicules circulant dans l'usine. Les véhicules circulant dans l'usine sont soit les véhicules fabriqués, soit les véhicules transportant les matières premières, les pièces et les sous-ensembles destinés à alimenter les ateliers de ferrage, de peinture, de montage, et le cas échéant d'emboutissage.

L'atelier de montage comprend également des zones de préparation secondaire 3 au niveau desquelles sont montés certains sous-ensembles avant de venir alimenter le flux de production FP1 sur la première ligne de montage. L'atelier de montage comprend également des zones logistiques 6 qui sont des zones de stockage de pièces ou de sous-ensembles destinées à alimenter soit le flux de production de la première ligne de montage, soit les zones de préparation secondaire 3 de la première ligne de montage.

Sur la première ligne de montage, le tronçon habillage caisse 1 fait face au tronçon montage véhicule 2. Les tronçons habillage caisse 1 et montage véhicule 2 se font face indirectement, car entre eux, se trouvent une zone de préparation secondaire 3 et une zone logistique 6. Les tronçons 1 et 2 sont alignés côte à côte, séparés par une zone de logistique 6 et une zone de préparation secondaire 3. En partant du bout d'usine 4, le long du tronçon montage véhicule 2 se trouve d'abord une zone de préparation secondaire 3 puis une zone de logistique 6. Le bout d'usine 4 est dans le prolongement des tronçons habillage caisse 1 et montage véhicule 2.

Dans un exemple préférentiel chiffré, la cadence de production est de 14 véhicules par heure pour la première ligne de montage. La totalité de la surface au sol couverte par l'atelier de montage représente environ 38.000 mètres carrés à 10% près.

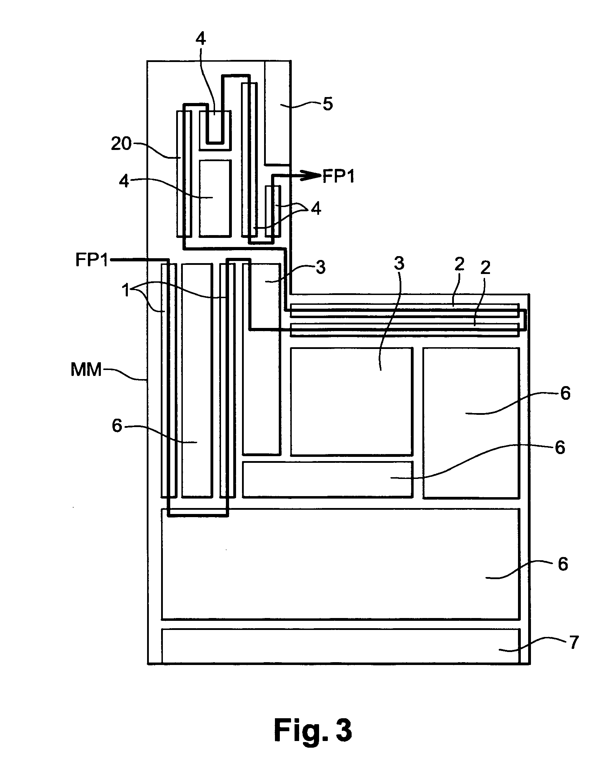

La figure 3 représente schématiquement un exemple d'atelier de montage d'une usine de fabrication de véhicules automobiles correspondant à la phase 2-1 de la figure 1. Sur la première ligne de montage, le tronçon montage véhicule 2 de

la figure 2 a été remplacé par un deuxième tronçon habillage caisse 1 qui fait indirectement face au premier tronçon habillage caisse 1, entre eux se trouvant maintenant une zone de logistique 6. Les zones de préparation secondaire 3 ont été regroupées dans le secteur angulaire formé d'une part par les tronçons habillage caisse 1 et d'autre part par les tronçons montage véhicule 2. Les zones de logistiques 6, le quai 7 et le bout d'usine 4 se sont agrandis. Deux tronçons montage véhicule 2 ont été ajoutés orthogonalement aux tronçons habillage caisse 1 de la première ligne de montage et parallèlement aux tronçons de la deuxième ligne de montage.

Dans le même exemple préférentiel chiffré, la cadence de production est devenue de 28 véhicules par heure pour la première ligne de montage. La totalité de la surface au sol couverte par l'atelier de montage représente maintenant environ 65.000 mètres carrés à 10% près.

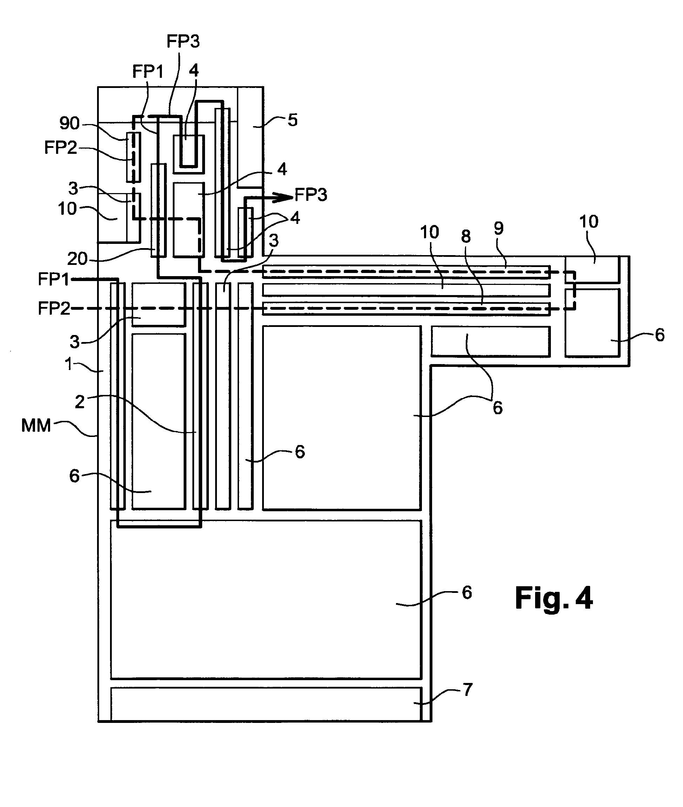

La figure 4 représente schématiquement un exemple d'atelier de montage d'une usine de fabrication de véhicules automobiles correspondant à la phase 2-2 de la figure 1.

La flèche FP1 représente le flux de production de la première ligne de montage qui est aussi le sens de circulation des véhicules sur la première ligne de montage dans l'atelier de montage. Les étapes habillage caisse sont réalisées sur le brin ou le tronçon habillage caisse 1. Les étapes montage véhicule sont réalisées sur le brin ou le tronçon montage véhicule 2. Un autre tronçon final de montage véhicule 20 est situé dans le bout d'usine 4.

La flèche FP2 représente le flux de production de la deuxième ligne de montage qui est aussi le sens de circulation des véhicules sur la deuxième ligne de montage dans l'atelier de montage. Les étapes habillage caisse sont réalisées sur le brin ou le tronçon habillage caisse 8. Les étapes montage véhicule sont réalisées sur le brin ou le tronçon montage véhicule 9. Un autre tronçon final de montage véhicule 90 est situé dans le bout d'usine 4.

A l'entrée du bout d'usine 4, les deux flux de production FP1 et FP2 se rejoignent en un flux final unique de production FP3 qui traverse le bout d'usine 4. Sur ce flux final unique FP3, circulent aussi bien les véhicules issus de la première ligne de montage que ceux issus de la deuxième ligne de montage. Les véhicules des deux lignes de montage sont intercalés les uns entre les autres pour éviter tout blocage de l'une des lignes de montage.

A l'issue du bout d'usine 4, les véhicules fabriqués sont aiguillés soit vers le parc retouche véhicules s'ils présentent des défauts pour que ceux-ci soient corrigés soit vers le parc véhicules neufs s'ils ne présentent pas ou plus de défaut. En provenance du parc fournisseur, les fournisseurs déchargent pièces et sous-ensembles sur le quai 7. Le bout d'usine 4 comprend une zone de qualité 5.

Le quai 7 est de préférence situé d'un seul côté de l'atelier de montage et avantageusement du côté opposé au bout d'usine 4 pour éviter ou du moins diminuer les croisements ou les perturbations au niveau des flux de personnes et au niveau des flux de véhicules circulant dans l'usine. Les véhicules circulant dans l'usine sont soit les véhicules fabriqués, soit les véhicules transportant les matières premières, les pièces et les sous-ensembles destinés à alimenter les ateliers de ferrage, de peinture, de montage, et le cas échéant d'emboutissage. L'atelier de montage comprend également des zones de préparation secondaire 3 au niveau desquelles sont montés certains sous-ensembles avant de venir alimenter le flux de production FP1 sur la première ligne de montage, ainsi que des zones de préparation secondaire 10 au niveau desquelles sont montés certains sous-ensembles avant de venir alimenter le flux de production FP2 sur la deuxième ligne de montage.

L'atelier de montage comprend également des zones logistiques 6 qui sont des zones de stockage de pièces ou de sous-ensembles destinées à alimenter soit le flux de production de l'une des lignes de montage, soit les zones de préparation secondaire 3 de la première ligne de montage, soit les zones de préparation secondaire 10 de la deuxième ligne de montage.

Sur la première ligne de montage, le tronçon habillage caisse 1 fait face au tronçon montage véhicule 2. Les tronçons habillage caisse 1 et montage véhicule 2 se font face indirectement, car entre eux, se trouvent une zone de préparation secondaire 3 et une zone logistique 6. Les tronçons 1 et 2 sont alignés côte à côte, séparés par une zone de logistique 6 et une zone de préparation secondaire 3. En partant du bout d'usine 4, le long du tronçon montage véhicule 2 se trouve d'abord une zone de préparation secondaire 3 puis une zone de logistique 6. Le bout d'usine 4 est dans le prolongement des tronçons habillage caisse 1 et montage véhicule 2.

Sur la deuxième ligne de montage, le tronçon habillage caisse 8 fait face au tronçon montage véhicule 9. Les tronçons habillage caisse 8 et montage véhicule 9 se font face indirectement, car entre eux, se trouvent une zone de préparation secondaire 10. Les tronçons 8 et 9 sont alignés côte à côte, séparés par une zone de préparation secondaire 10. Le long du tronçon habillage caisse 8 se trouve des zones de logistique 6.

Dans un exemple préférentiel chiffré, la cadence de production est de 14 véhicules par heure pour la première ligne de montage et de 14 véhicules par heure pour la deuxième ligne de montage. La totalité de la surface au sol couverte par l'atelier de montage représente environ 76.000 mètres carrés à 10% près.

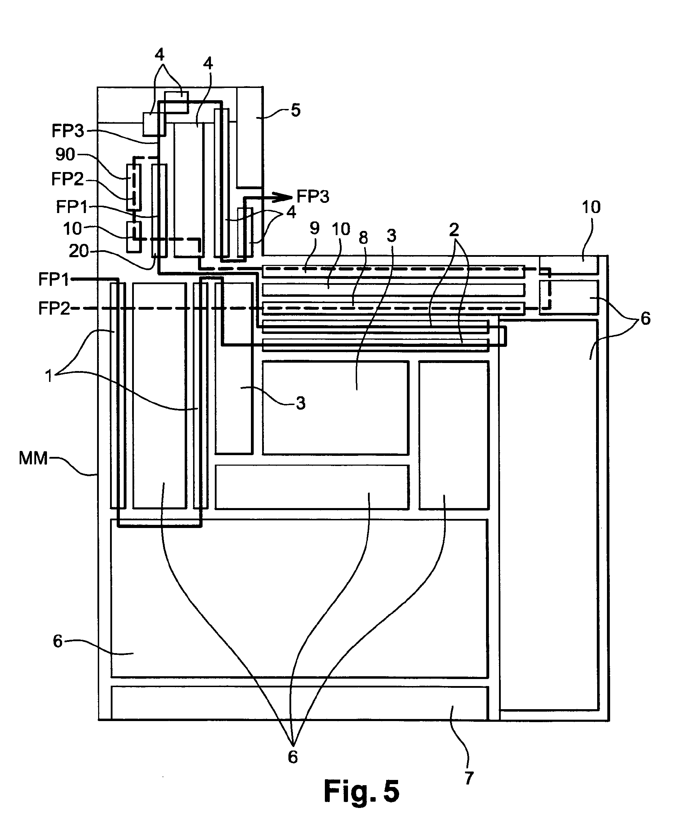

La figure 5 représente schématiquement un exemple d'atelier de montage d'une usine de fabrication de véhicules automobiles correspondant à la phase 3-1 de la figure 1.

La deuxième ligne de montage présente une taille et une cadence similaire à celle de la figure 4. Les tronçons de la deuxième ligne de montage sont restés identiques ainsi que les zones de préparation secondaires 10. Seules les zones de logistique 6 qui sont communes aux deux lignes de montage sont déplacées et ou agrandies. Les zones de logistique 6 qui sont communes dans leur ensemble ne font pas obstacle à ce que telle ou telle endroit des zones de logistique 6 soient plutôt affectés à l'une ou à l'autre ligne de montage.

Par rapport à la figure 4, sur la première ligne de montage, le tronçon montage véhicule 2 de la figure 1 a été remplacé par un deuxième tronçon habillage caisse 1 qui fait indirectement face au premier tronçon habillage caisse 1, entre eux se trouvant maintenant une zone de logistique 6. Les zones de préparation secondaire 3 ont été regroupées dans le secteur angulaire formé d'une part par les tronçons habillage caisse 1 et d'autre part par les tronçons montage véhicule 2. Les zones de logistiques 6, le quai 7 et le bout d'usine 4 se sont agrandis. Deux tronçons montage véhicule 2 ont été ajoutés orthogonalement aux tronçons habillage caisse 1 de la première ligne de montage et parallèlement aux tronçons de la deuxième ligne de montage.

Dans le même exemple préférentiel chiffré, la cadence de production est devenue de 28 véhicules par heure pour la première ligne de montage tandis qu'elle est restée de 14 véhicules par heure pour la deuxième ligne de montage. La totalité de la surface au sol couverte par l'atelier de montage représente maintenant environ 95.000 mètres carrés à 10% près.

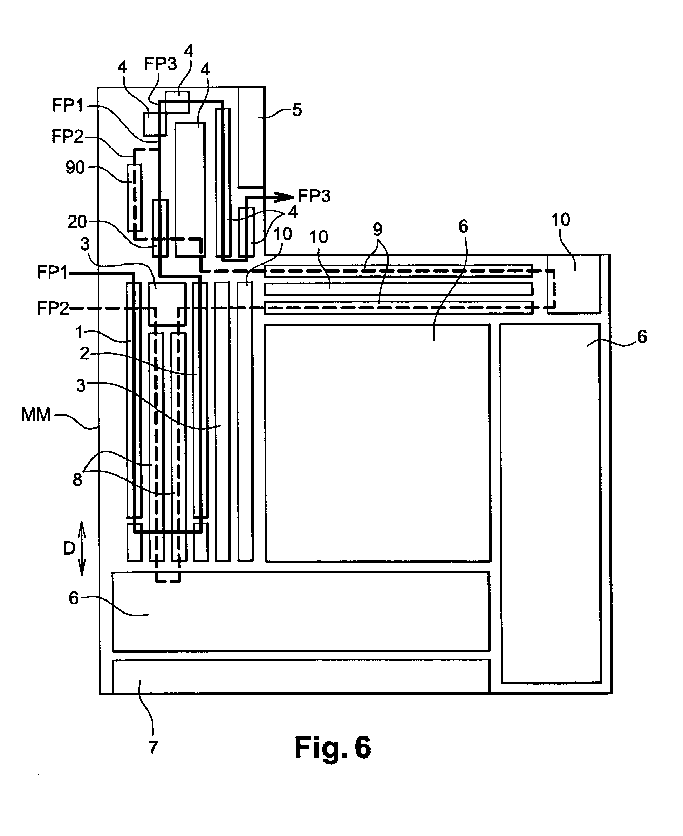

La figure 6 représente schématiquement un exemple d'atelier de montage d'une usine de fabrication de véhicules automobiles correspondant à la phase 3-2 de la figure 1.

La première ligne de montage présente une taille et une cadence similaire à celle de la figure 4. Les tronçons de la première ligne de montage sont restés identiques. La zone de préparation secondaire 3, située à côté du tronçon montage véhicule 20, a été déplacée pour venir agrandir la zone de préparation 3 qui était située entre le tronçon habillage caisse 1 et le tronçon montage véhicule 2 de la première ligne de montage.

Les zones de logistique 6 qui sont communes aux deux lignes de montage sont déplacées et ou agrandies. Les zones de logistique 6 qui sont communes dans leur ensemble ne font pas obstacle à ce que tel ou tel endroit des zones de logistique 6 soient plutôt affectés à l'une ou à l'autre ligne de montage.

Par rapport à la figure 4, sur la deuxième ligne de montage, le tronçon habillage caisse 8 de la figure 4 a été remplacé par un deuxième tronçon montage véhicule 9 qui fait indirectement face au premier tronçon montage véhicule 9, entre eux se trouvant une zone de préparation secondaire 10. La zone de préparation secondaire 10, située à côté du tronçon montage véhicule 90, a été déplacée pour venir agrandir la zone de préparation 10 qui était située dans le prolongement du tronçon montage véhicule 9 de la deuxième ligne de montage.

Les zones de logistiques 6, le quai 7 et le bout d'usine 4 se sont agrandis. Deux tronçons habillage caisse 8 ont été ajoutés d'une part entre les tronçons habillage caisse 1 et montage véhicule 2 de la première ligne de montage et d'autre part parallèlement aux les tronçons habillage caisse 1 et montage véhicule 2 de la première ligne de montage. Ces deux tronçons habillage caisse 8 sont situés orthogonalement aux tronçons montage véhicule 9 de la deuxième ligne de montage.

Les tronçons habillage caisse 8 de la deuxième ligne de montage sont longitudinalement décalés par rapport aux tronçons habillage caisse 1 et montage véhicule 2 de la première ligne de montage. Les entrées des flux de production de véhicules FP1 et FP2 sont également décalées entre elles.

Dans le même exemple préférentiel chiffré, la cadence de production est devenue de 28 véhicules par heure pour la deuxième ligne de montage tandis qu'elle est restée de 14 véhicules par heure pour la première ligne de montage. La totalité de la surface au sol couverte par l'atelier de montage représente maintenant environ 95.000 mètres carrés à 10% près.

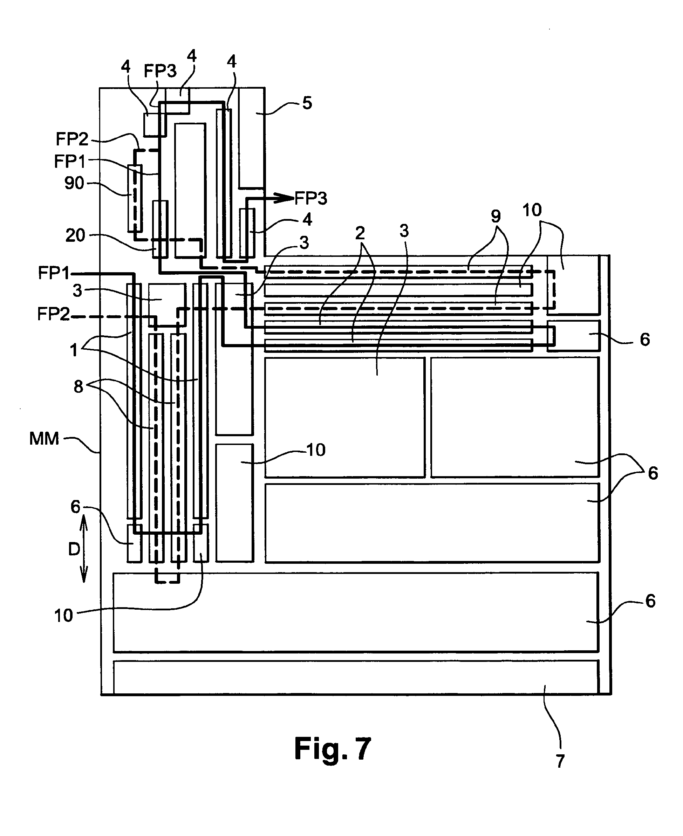

La figure 7 représente schématiquement un exemple d'atelier de montage d'une usine de fabrication de véhicules automobiles correspondant à la phase 4 de la figure 1.

Sur la première ligne de montage, le tronçon montage véhicule 2 de la figure 6 a été remplacé par un deuxième tronçon habillage caisse 1 qui fait indirectement face au premier tronçon habillage caisse 1, entre eux se trouvant maintenant les tronçons habillage caisse 8 de la deuxième ligne de montage. Les zones de préparation secondaire 3 et les zones de préparation secondaire 10 ont été plutôt regroupées dans le secteur angulaire formé d'une part par les tronçons habillage caisse 1 et d'autre part par les tronçons montage véhicule 2 de la première ligne de montage. Les zones de logistiques 6, le quai 7 et le bout d'usine 4 se sont agrandis. Deux tronçons montage véhicule 2 ont été ajoutés orthogonalement aux tronçons habillage caisse 1 de la première ligne de montage et parallèlement aux tronçons montage véhicule 9 de la deuxième ligne de montage. Les tronçons habillage caisse 8 de la deuxième ligne de montage sont longitudinalement décalés par rapport aux tronçons habillage caisse 1 de la première ligne de montage.

Dans le même exemple préférentiel chiffré, la cadence de production est devenue de 28 véhicules par heure pour la première ligne de montage tandis qu'elle est restée de 28 véhicules par heure pour la deuxième ligne de montage. La totalité de la surface au sol couverte par l'atelier de montage représente maintenant environ 118.000 mètres carrés à 10% près.

Pour mieux expliquer la configuration préférentielle des différents parties de l'atelier de montage entre elles, on peut considérer un T virtuel dont la barre horizontale serait constituée par le bout d'usine et les tronçons situés dans le prolongement du bout d'usine, tandis que la barre verticale du T serait constituée par les tronçons orthogonaux aux précédents. Sur les figures 2 à 7, une disposition particulière de ce T virtuel est représentée. Toutefois, d'autres dispositions de ce T sur la surface au sol de l'atelier de montage font également l'affaire, pourvu que la configuration relative des portions du T entre elles soit respectée, sous une forme identique ou symétrique. En d'autres termes, par rapport à la configuration représentée sur les figures 2 à 7, des configurations obtenues par rotation ou par symétrie axiale sont également intéressantes.

De manière plus générale, et indépendamment de l'exemple précis présenté et décrit aux figures 2 à 7, ou en combinaison avec ledit exemple, différentes options préférentielles peuvent être présentes seules ou en combinaison entre elles.

De préférence, l'atelier de montage comprend un bout d'usine destiné à contrôler les véhicules en sortie des deux lignes de montage. De préférence, le bout d'usine est situé dans le prolongement dudit ou desdits tronçons habillage caisse de la première ligne de montage.

De préférence, l'atelier de montage comprend un bout d'usine destiné à contrôler les véhicules en sortie des lignes de montage et un seul quai de déchargement fournisseurs qui approvisionne l'atelier de montage. Ledit quai est situé du côté de l'atelier de montage qui est opposé au bout d'usine. Plusieurs quais de déchargement fournisseurs peuvent être prévus, mais cela introduit plus de perturbation dans les flux de personnes et de véhicules circulant dans l'usine.

Le principe de l'atelier de montage selon l'invention est de proposer une configuration initiale ou antérieure permettant une évolutivité importante pour un niveau de bouleversements limité et un investissement financier initial raisonnable, car la surface au sol nécessaire aux différentes tailles d'atelier de montage envisagées, n'est pas excessivement grande pour la taille d'atelier de montage correspondant à la petite cadence de production de véhicules. Un niveau de bouleversements limité signifie d'essayer de toucher le moins possible, ou en tous cas pas trop, à tout ce qui concerne les lignes de production et la maçonnerie de l'atelier de montage. La limitation du niveau de bouleversement passe aussi par une tendance à toucher et à perturber le moins possible la circulation des flux, des personnes et des véhicules, dans l'atelier de montage. Une fois agrandi, l'atelier de montage évolué, c'est-à-dire ayant évolué à partir d'un atelier de montage initial ou antérieur, tout en ayant de nouvelles particularités, conserve celles dudit atelier de montage initial ou antérieur dont il est issu.

La bonne configuration de départ de l'atelier de montage et la bonne évolution lors du passage d'une phase à l'autre permettent l'extension de l'atelier de montage en conservant au moins un mur, de conserver au niveau de chaque phase les zones de préparation secondaire relativement proches des endroits des lignes de montage que les sous-ensembles assemblés doivent alimenter, de maintenir un approvisionnement en bordure des lignes de montage des sièges et des roues qui soit synchrone, de maintenir des flux de production véhicule et acheminement des pièces et des sous-ensembles qui soient relativement sépares les uns des autres.

De préférence, la première ligne de montage ne comprend que deux tronçons habillage caisse et ne comprend que deux tronçons montage véhicule.

De préférence, l'atelier a été agrandi au sol à partir d'un atelier antérieur construit plusieurs années auparavant, dont la cadence de production de véhicules était inférieure et dont l'emplacement a été conservé, l'un desdits tronçons habillage caisse de la première ligne de montage a été conservé dudit atelier antérieur et l'autre desdits tronçons habillage caisse de la première ligne de montage a été installé sur l'emplacement d'un tronçon montage véhicule de la première ligne de montage dudit atelier antérieur.

De préférence, l'atelier de montage a été agrandi à partir d'un atelier de montage antérieur construit plusieurs années auparavant et dont la cadence de production de véhicules était inférieure. En effet, il s'agit d'un autre atelier de montage provenant de l'agrandissement d'un atelier de montage, initial ou antérieur, lequel a fonctionné en production. Il ne s'agit donc pas de deux phases de construction d'un même atelier de montage, soit lorsqu'il n'y a eu aucun fonctionnement de production entre les deux phases soit lorsqu'il n'y a eu que des tests ou des rodages de machines ou de lignes de production entre les deux phases. L'atelier de montage a été agrandi au sol à partir de son emplacement antérieur lequel a été conservé. Agrandir un atelier au sol signifie augmenter sa surface au sol et non pas augmenter sa surface seulement en ajoutant ou en remplissant un deuxième étage par exemple.

Lorsque l'emplacement d'un atelier au sol est conservé, le nouvel atelier, indépendamment d'être plus grand que l'ancien atelier, couvre substantiellement l'emplacement de l'ancien atelier ; en d'autres termes, l'atelier a été agrandi et non pas remplacé par un atelier plus grand localisé ailleurs. La conservation de l'emplacement antérieur permet de conserver une partie au moins des installations intérieures de l'atelier ainsi que le cas échéant une partie de la maçonnerie intérieure et ou extérieure de l'atelier.

## Revendications

1. Atelier de montage d'une usine de fabrication de véhicules automobiles, comprenant :
- une première ligne de montage d'un premier segment véhicule, comprenant un tronçon habillage caisse (1) et un autre tronçon ;
**caractérisé en ce que** l'atelier de montage comprend aussi :
- une deuxième ligne de montage d'un deuxième segment véhicule, comprenant deux tronçons habillage caisse (8) situés le long l'un de l'autre ;
**en ce qu'**un desdits tronçons habillage caisse (8) de la deuxième ligne de montage est situé le long dudit tronçon habillage caisse (1) de la première ligne de montage ;
et **en ce que** l'autre desdits tronçons habillage caisse (8) de la deuxième ligne de montage est situé le long dudit autre tronçon de la première ligne de montage.

2. Atelier de montage selon la revendication 1 , **caractérisé en ce que** ledit tronçon habillage caisse (1) de la première ligne de montage est situé au début de la première ligne de montage.

3. Atelier de montage selon l'une quelconque des revendications 1 à 2, **caractérisé en ce que** ledit autre tronçon de la première ligne de montage est un tronçon montage véhicule (2).

4. Atelier de montage selon l'une quelconque des revendications 1 à 2, **caractérisé en ce que** ledit autre tronçon de la première ligne de montage est un tronçon habillage caisse (1).

5. Atelier de montage selon la revendication 4, **caractérisé en ce que** la première ligne de montage comprend aussi deux tronçons montage véhicule (2) situés orthogonalement aux deux tronçons habillage caisse (1) de la première ligne de montage.

6. Atelier de montage selon l'une quelconque des revendications précédentes, **caractérisé en ce que** la deuxième ligne de montage comprend aussi deux tronçons montage véhicule (9) situés orthogonalement aux deux tronçons habillage caisse (8) de la deuxième ligne de montage.

7. Atelier de montage selon l'une quelconque des revendications précédentes, **caractérisé en ce que** lesdits tronçons habillage caisse (8) de la deuxième ligne de montage sont longitudinalement décalés par rapport aux dits tronçons de la première ligne de montage.

8. Atelier de montage selon l'une quelconque des revendications précédentes, **caractérisé en ce que** l'entrée de la deuxième ligne de montage est située dans le prolongement du premier tronçon de montage (9) de la deuxième ligne de montage.

9. Atelier de montage selon l'une quelconque des revendications précédentes, **caractérisé en ce que** l'atelier de montage comprend aussi un bout d'usine (4) destiné à contrôler les véhicules en sortie des deux lignes de montage.

10. Atelier de montage selon la revendication 9, **caractérisé en ce que** le bout d'usine (4) est situé dans le prolongement dudit ou desdits tronçons habillage caisse (1) de la première ligne de montage.

11. Atelier de montage selon l'une quelconque des revendications précédentes, **caractérisé en ce que** la première ligne de montage ne comprend que deux tronçons habillage caisse (1) et ne comprend que deux tronçons montage véhicule (2).

12. Atelier de montage selon l'une quelconque des revendications précédentes, **caractérisé en ce que** l'atelier a été agrandi au sol à partir d'un atelier antérieur construit plusieurs années auparavant, dont la cadence de production de véhicules était inférieure et dont l'emplacement a été conservé, **en ce que** l'un desdits tronçons habillage caisse de la première ligne de montage a été conservé dudit atelier antérieur et **en ce que** l'autre desdits tronçons habillage caisse de la première ligne de montage a été installé sur l'emplacement d'un tronçon montage véhicule de la première ligne de montage dudit atelier antérieur.

13. Atelier de montage selon l'une quelconque des revendications précédentes, **caractérisé en ce que** l'atelier de montage est une maçonnerie.

14. Atelier de montage selon l'une quelconque des revendications précédentes, **caractérisé en ce qu'**il comprend un bout d'usine (4) destiné à contrôler les véhicules en sortie des lignes de montage et un seul quai (7) de déchargement fournisseurs qui approvisionne l'atelier de montage et **en ce que** ledit quai (7) est situé du côté de l'atelier de montage qui est opposé au bout d'usine (4).

15. Procédé d'agrandissement d'un atelier de montage d'une usine de fabrication de véhicules automobiles, de sorte à obtenir un nouvel atelier de montage à partir d'un atelier de montage antérieur de plusieurs années, ledit atelier de montage antérieur comprenant une première ligne de montage, d'un premier segment véhicule, laquelle comprend deux tronçons (1, 2) en regard l'un de l'autre et séparés l'un de l'autre par un espace, le procédé étant **caractérisé en ce qu'**il comprend une étape d'installation de deux tronçons habillage caisse (8) d'une deuxième ligne de montage, d'un deuxième segment véhicule, dans l'espace entre lesdits tronçons de la première ligne de montage, de manière à ce que lesdits quatre tronçons soient parallèles les uns aux autres, afin d'augmenter la cadence de production de véhicules de la deuxième ligne de montage.

16. Procédé d'agrandissement d'un atelier de montage selon la revendication 15, **caractérisé en ce que** plusieurs tronçons sont ajoutés aux dits tronçons existants de la première ligne de montage dont au moins les emplacements sont conservés, tout en n'étant pas placés dans le prolongement ni dudit ou desdits tronçons existants conservés ni dudit ou desdits emplacements conservés de tronçons existants de la première ligne de montage et **en ce que** l'emplacement de l'atelier antérieur est conservé.

17. Procédé d'agrandissement d'un atelier de montage selon l'une quelconque des revendications 15 à 16, **caractérisé en ce qu'**au moins un mur (MM) de l'atelier de montage est conservé.

## Claims

1. Assembly shop of a factory which manufactures motor vehicles, comprising:
- a first assembly line for a first vehicle segment, comprising a body fitting portion (1) and another portion;
**characterised in that** the assembly shop also comprises:
- a second assembly line for a second vehicle segment, comprising two body fitting portions (8) located alongside one another;
**in that** one of said body fitting portions (8) of the second assembly line is located alongside said body fitting portion (1) of the first assembly line;
and **in that** the other one of said body fitting portions (8) of the second assembly line is located alongside said other portion of the first assembly line.

2. Assembly shop according to claim 1, **characterised in that** said body fitting portion (1) of the first assembly line is located at the start of the first assembly line.

3. Assembly shop according to either claim 1 or claim 2, **characterised in that** said other portion of the first assembly line is a vehicle assembly portion (2).

4. Assembly shop according to either claim 1 or claim 2, **characterised in that** said other portion of the first assembly line is a body fitting portion (1).

5. Assembly shop according to claim 4, **characterised in that** the first assembly line also comprises two vehicle assembly portions (2) located orthogonally to the two body fitting portions (1) of the first assembly line.

6. Assembly shop according to any one of the preceding claims, **characterised in that** the second assembly line also comprises two vehicle assembly portions (9) located orthogonally to the two body fitting portions (8) of the second assembly line.

7. Assembly shop according to any one of the preceding claims, **characterised in that** said body fitting portions (8) of the second assembly line are longitudinally offset from said portions of the first assembly line.

8. Assembly shop according to any one of the preceding claims, **characterised in that** the start of the second assembly line forms an extension of the first assembly portion (9) of the second assembly line.

9. Assembly shop according to any one of the preceding claims, **characterised in that** the assembly shop also comprises a factory end (4) for monitoring the vehicles coming off the two assembly lines.

10. Assembly shop according to claim 9, **characterised in that** the factory end (4) forms an extension of said body fitting portion(s) (1) of the first assembly line.

11. Assembly shop according to any one of the preceding claims, **characterised in that** the first assembly line comprises only two body fitting portions (1) and comprises only two vehicle assembly portions (2).

12. Assembly shop according to any one of the preceding claims, **characterised in that** the shop floor has been enlarged starting from a previous shop built a number of years earlier, which had a lower vehicle production rate and the site of which has been retained, **in that** one of said body fitting portions of the first assembly line has been retained from said previous shop and **in that** the other of said body fitting portions of the first assembly line has been installed on the site of a vehicle assembly portion of the first assembly line of said previous shop.

13. Assembly shop according to any one of the preceding claims, **characterised in that** the assembly shop is a masonry construction.

14. Assembly shop according to any one of the preceding claims, **characterised in that** it comprises a factory end (4) for monitoring the vehicles coming off the assembly lines and a single suppliers' unloading bay (7) which supplies the assembly shop and **in that** said bay (7) is located on the side of the assembly shop opposite the factory end (4).

15. Method for enlarging an assembly shop of a factory which manufactures motor vehicles so as to obtain a new assembly shop, starting from an assembly shop which dates from a number of years previously and comprises a first assembly line for a first vehicle segment, which first assembly line comprises two portions (1, 2) which face one another and are separated from one another by a space, the method being **characterised in that** it comprises a step of installing two body fitting portions (8) of a second assembly line, for a second vehicle segment, in the space between said portions of the first assembly line in such a way that said four portions are parallel to one another, in order to increase the vehicle production rate of the second assembly line.

16. Method for enlarging an assembly shop according to claim 15, **characterised in that** a plurality of portions are added to said existing portions of the first assembly line, of which at least the sites are retained, but are not arranged so as to form an extension of either said retained existing portion(s) or said retained sites of existing portions of the first assembly line, and **in that** the site of the previous shop is retained.

17. Method for enlarging an assembly shop according to either claim 15 or claim 16, **characterised in that** at least one wall (MM) of the assembly shop is retained.

## Patentansprüche

1. Montagewerkstatt einer Fabrik zur Herstellung von Kraftfahrzeugen, umfassend:
- eine erste Montagelinie eines ersten Fahrzeugsegments, die einen Abschnitt für die Ausstattung des Aufbaus (1) und einen anderen Abschnitt umfasst;
**dadurch gekennzeichnet, dass** die Montagewerkstatt darüber hinaus:
- eine zweite Montagelinie eines zweiten Fahrzeugsegments umfasst, die zwei Abschnitte für die Ausstattung des Aufbaus (8) umfasst, die einer entlang dem anderen angeordnet sind;
**dadurch**, dass einer der Abschnitte für die Ausstattung des Aufbaus (8) der zweiten Montagelinie entlang dem Abschnitt für die Ausstattung des Aufbaus (1) der ersten Montagelinie angeordnet ist;
und **dadurch**, dass der andere der Abschnitte für die Ausstattung des Aufbaus (8) der zweiten Montagelinie entlang dem anderen Abschnitt der ersten Montagelinie angeordnet ist.

2. Montagewerkstatt nach Anspruch 1, **dadurch gekennzeichnet, dass** der Abschnitt für die Ausstattung des Aufbaus (1) der ersten Montagelinie am Anfang der ersten Montagelinie angeordnet ist.

3. Montagewerkstatt nach einem der Ansprüche 1 bis 2, **dadurch gekennzeichnet, dass** der andere Abschnitt der ersten Montagelinie ein Abschnitt für die Montage von Fahrzeugen (2) ist.

4. Montagewerkstatt nach einem der Ansprüche 1 bis 2, **dadurch gekennzeichnet, dass** der andere Abschnitt der ersten Montagelinie ein Abschnitt für die Ausstattung des Aufbaus (1) ist.

5. Montagewerkstatt nach Anspruch 4, **dadurch gekennzeichnet, dass** die erste Montagelinie ferner zwei Abschnitte für die Montage von Fahrzeugen (2) umfasst, die im rechten Winkel zu den beiden Abschnitten für die Ausstattung des Aufbaus (1) der ersten Montagelinie angeordnet sind.

6. Montagewerkstatt nach einem der vorhergehenden Ansprüche, **dadurch gekennzeichnet, dass** die zweite Montagelinie ferner zwei Abschnitte für die Montage von Fahrzeugen (9) umfasst, die im rechten Winkel zu den beiden Abschnitten für die Ausstattung des Aufbaus (8) der zweiten Montagelinie angeordnet sind.

7. Montagewerkstatt nach einem der vorhergehenden Ansprüche, **dadurch gekennzeichnet, dass** die Abschnitte für die Ausstattung des Aufbaus (8) der zweiten Montagelinie in Bezug auf die Abschnitte der ersten Montagelinie in Längsrichtung versetzt sind.

8. Montagewerkstatt nach einem der vorhergehenden Ansprüche, **dadurch gekennzeichnet, dass** der Eingang der zweiten Montagelinie in der Verlängerung des ersten Abschnitts für die Montage (9) der zweiten Montagelinie angeordnet ist.

9. Montagewerkstatt nach einem der vorhergehenden Ansprüche, **dadurch gekennzeichnet, dass** die Montagewerkstatt ferner einen Teilbereich der Fabrik (4) umfasst, der für die Kontrolle der Fahrzeuge am Ausgang der beiden Montagelinien bestimmt ist.

10. Montagewerkstatt nach Anspruch 9, **dadurch gekennzeichnet, dass** der Teilbereich der Fabrik (4) in der Verlängerung des Abschnitts oder der Abschnitte für die Ausstattung des Aufbaus (1) der ersten Montagelinie angeordnet ist.

11. Montagewerkstatt nach einem der vorhergehenden Ansprüche, **dadurch gekennzeichnet, dass** die erste Montagelinie nur zwei Abschnitte für die Ausstattung des Aufbaus (1) und nur zwei Abschnitte für die Montage von Fahrzeugen (2) umfasst.

12. Montagewerkstatt nach einem der vorhergehenden Ansprüche, **dadurch gekennzeichnet, dass** die Werkstatt flächenmäßig erweitert wurde, und zwar ausgehend von einer ursprünglichen Werkstatt, die mehrere Jahre zuvor erbaut wurde, deren Durchsatz für die Produktion von Fahrzeugen geringer war und deren Standort erhalten wurde, **dadurch**, dass einer der Abschnitte für die Ausstattung des Aufbaus der ersten Montagelinie der ursprünglichen Werkstatt erhalten wurde und **dadurch**, dass der andere der Abschnitte für die Ausstattung des Aufbaus der ersten Montagelinie am Standort eines Abschnitts für die Montage von Fahrzeugen der ersten Montagelinie der ursprünglichen Werkstatt aufgebaut wurde.

13. Montagewerkstatt nach einem der vorhergehenden Ansprüche, **dadurch gekennzeichnet, dass** die Montagewerkstatt ein gemauertes Gebäude ist.

14. Montagewerkstatt nach einem der vorhergehenden Ansprüche, **dadurch gekennzeichnet, dass** sie einen Teilbereich der Fabrik (4), der für die Kontrolle der Fahrzeuge am Ausgang der beiden Montagelinien bestimmt ist, und eine einzige Rampe (7) für die Entladung von Lieferanten umfasst, die die Montagewerkstatt mit Nachschub versorgt, und **dadurch**, dass die Rampe (7) an der Seite der Montagewerkstatt angeordnet ist, die dem Teilbereich der Fabrik (4) gegenüber liegt.

15. Verfahren zur Erweiterung einer Montagewerkstatt einer Fabrik zur Herstellung von Kraftfahrzeugen, um ausgehend von einer ursprünglichen Werkstatt, die mehrere Jahre alt ist, eine neue Montagewerkstatt zu erhalten, wobei die ursprüngliche Montagewerkstatt eine erste Montagelinie eines ersten Fahrzeugsegments umfasst, die zwei Abschnitte (1, 2), die einander gegenüber liegen und die durch einen Freiraum voneinander getrennt sind, umfasst, wobei das Verfahren **dadurch gekennzeichnet ist, dass** es einen Schritt der Installation von zwei Abschnitten für die Ausstattung des Aufbaus (8) einer zweiten Montagelinie für ein zweites Fahrzeugsegment im Freiraum zwischen den Abschnitten der ersten Montagelinie umfasst, sodass die vier Abschnitte zueinander parallel sind, um den Durchsatz für die Produktion von Fahrzeugen der zweiten Montagelinie zu erhöhen.

16. Verfahren zur Erweiterung einer Montagewerkstatt nach Anspruch 15, **dadurch gekennzeichnet, dass** mehrere Abschnitte zu den bestehenden Abschnitten der ersten Montagelinie hinzugefügt werden, von denen zumindest die Standorte erhalten bleiben, wobei das Ganze weder in der Verlängerung des oder der bestehenden, erhaltenen Abschnitte, noch in jener des oder der erhaltenen Standorte bestehender Abschnitte der ersten Montagelinie positioniert wird, und **dadurch**, dass die ursprüngliche Werkstatt erhalten bleibt.

17. Verfahren zur Erweiterung einer Montagewerkstatt nach Anspruch 15 bis 16, **dadurch gekennzeichnet, dass** mindestens eine Mauer (MM) der Montagewerkstatt erhalten bleibt.
